**Europäisches Patentamt**

**European Patent Office**

**Office européen des brevets**

(19)

(11) Veröffentlichungsnummer: **0 650 033 A1**

## (12) EUROPÄISCHE PATENTANMELDUNG

(21) Anmeldenummer: **94112516.3**

(22) Anmeldetag: **10.08.94**

(51) Int. Cl.⁶: **G01D 18/00**, F02D 41/22

(30) Priorität: **20.10.93 DE 4335700**

(43) Veröffentlichungstag der Anmeldung:
**26.04.95 Patentblatt 95/17**

(84) Benannte Vertragsstaaten:
**DE FR GB IT SE**

(71) Anmelder: **ROBERT BOSCH GMBH**
**Postfach 30 02 20**
**D-70442 Stuttgart (DE)**

(72) Erfinder: **Eidler, Franz, Ing. (grad.)**
**Zeppelinstrasse 67**
**D-71665 Vaihingen (DE)**
Erfinder: **Zimmermann, Werner, Dr. Dr.-Ing.**
**Dreysestrasse 9 B**
**D-70435 Stuttgart (DE)**
Erfinder: **Rüping, Thomas, Dipl.-Ing. (FH)**
**Öschlestrasse 3**
**D-73252 Lenningen (DE)**

(54) **Verfahren und Vorrichtung zur Funktionsüberwachung eines Sensors.**

(57) Es wird ein Verfahren und eine Vorrichtung zur Funktionsüberwachung eines Sensors, insbesondere eines Sensors zur Erfassung eines Meßwerts in einem Kraftfahrzeug beschrieben. Bei Vorliegen vorgegebener Betriebszustände wird ein Meßwert erfaßt und mit einem Referenzwert verglichen Auf Fehler wird erkannt, wenn ein vom Sensor bereitgestellter Meßwert um mehr als einen Toleranzwert von einem Referenzwert abweicht. Als Referenzwert dient ein zu einem früheren Zeitpunkt, bei dem ein entsprechender Betriebszustand vorlag, erfaßter und abgespeicherter Meßwert.

Fig. 2

EP 0 650 033 A1

## Stand der Technik

Die Erfindung betrifft ein Verfahren und eine Vorrichtung zur Funktionsüberwachung eines Sensors.

Ein solches Verfahren und eine solche Vorrichtung zur Funktionsüberwachung eines Sensors, insbesondere eines Sensors zur Erfassung eines Meßwerts in einem Kraftfahrzeug` ist aus der DE-OS 34 28 879 (US-A 4 730 264) bekannt. Dort wird ein Verfahren beschrieben, bei dem laufend die neu erfaßten Meßwerte mit einem älteren abgespeicherten Extremwert verglichen werden. Ist der neue Meßwert größer als der Extremwert, so wird der Meßwert als neuer Extremwert gespeichert.

Bei der Regelung von Brennkraftmaschinen dienen häufig induktiv oder potentiometrisch wirkende Sensoren, die mit einem Steuergerät verbunden sind, zur Erfassung von Meßgrößen. Solche Meßgrößen sind beispielsweise die Stellung der Drosselklappe eines Ottomotors, die Stellung der Regelstange einer Dieseleinspritzpumpe oder die Stellung eines Fahrpedals.

Durch Drift-Effekte, z.B. durch mechanischen Verschleiß oder durch Übergangswiderstände in den Verbindungsleitungen zum Steuergerät, kann dabei im Laufe der Betriebsdauer der Anordnung eine Verfälschung der Meßwerte eintreten. Um die Wirkung dieser Effekte zu verringern, müssen solche Sensoren häufig aufwendig konstruiert werden oder sie sind einer regelmäßigen Wartung und Justierung zu unterziehen.

## Aufgabe der Erfindung

Der Erfindung liegt die Aufgabe zugrunde, bei einem Verfahren zur Funktionsüberwachung eines Sensors auftretende Drifteffekte zu erkennen und ggf. zu kompensieren. Diese Aufgabe wird durch die in unabhängigen Ansprüchen gekennzeichneten Merkmale gelöst.

## Vorteile der Erfindung

Mittels des beschriebenen Verfahrens und der beschriebenen Vorrichtung können Driften im Sensor oder zugeordneten Elementen über die Lebensdauer des Steuergeräts erkannt und ggf. kompensiert werden.

Vorteilhafte und zweckmäßige Ausgestaltungen und Weiterbildungen der Erfindung sind in den Unteransprüchen gekennzeichnet.

## Zeichnung

Die Erfindung wird nachstehend anhand der in der Zeichnung dargestellten Ausführungsform erläutert. Es zeigen Figur 1 ein Blockdiagramm einer Steuereinrichtung für eine Brennkraftmaschine, Figur 2 ein Flußdiagramm zur Erläuterung des Verfahrens zur Erfassung von Referenzwerten, Figur 3 ein Flußdiagramm zur Verdeutlichung einer Fehlererkennung, Figur 4 ein Flußdiagramm zur Verdeutlichung des Verfahrens zur Korrektur der Drifterscheingungen und Figur 5 ein weiteres Flußdiagramm eines weiteren Verfahrens zum Erkennen einer Drift.

## Beschreibung der Ausführungsbeispiele

Im folgenden wird die erfindungsgemäße Vorrichtung und das erfindungsgemäße Verfahren am Beispiel einer selbstzündenden Brennkraftmaschine beschrieben. Beim dargestellten Ausführungsbeispiel dient eine Regelstange einer Dieselbrennkraftmaschine als Steller. Ein entsprechendes Verfahren kann auch bei Steuerungen mit einer Drosselklappe bei fremdgezündeten Brennkraftmaschinen verwendet werden. Desweiteren ist auch der Einsatz bei Potentiometern zur Erfassung der Fahrpedalstellung möglich. Prinzipiell ist die beschriebene Vorgehensweise bei allen Sensoren anwendbar, bei denen wenigstens ein bestimmter Zustand auftritt, bei dem ein definierter Meßwert vorliegt.

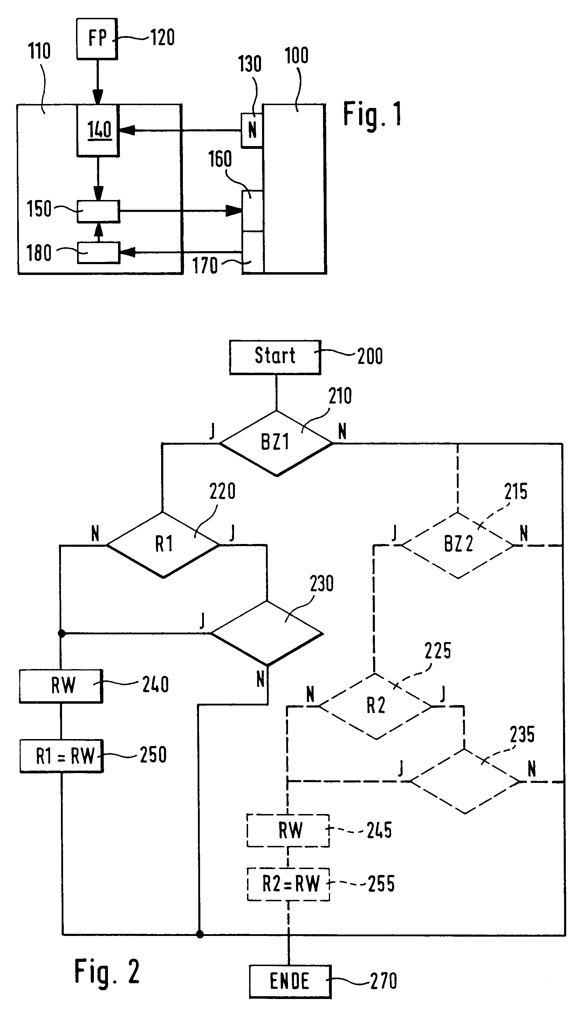

In Figur 1 ist ein Blockdiagramm der wesentlichsten Elemente der erfindungsgemäßen Vorrichtung aufgezeigt. Eine Brennkraftmaschine ist mit 100 bezeichnet. Diese steht mit einer Steuereinheit 110 in Verbindung. Die Steuereinheit verarbeitet Signale verschiedener Sensoren 120, die Meßwerte bereitstellen.

An der Brennkraftmaschine 100 sind verschiedene Sensoren 130 zur Bereitstellung verschiedener Meßwerte angeordnet. Mit den Ausgangssignalen dieser Sensoren 120 und 130 wird die Steuereinheit 110 und dort insbesondere eine Sollwertvorgabe 140 beaufschlagt. Diese Sollwertvorgabe erzeugt ein Signal zur Beaufschlagung einer Steuerung 150, die wiederum ein, im Bereich der Brennkraftmaschine angeordneten, Steller 160 mit Signalen beaufschlagt. An dem Steller 160 ist ein Istwertgeber 170 angeordnet, der wiederum eine Istwertberechnung mit einem Istwert beaufschlagt. Das Ausgangssignal der Istwertberechnung 180 gelangt zur Steuerung 150.

Bei einer Dieselbrennkraftmaschine handelt es sich bei dem Sensor 130 beispielsweise um einen Sensor zur Erfassung der Drehzahl N, der Motortemperatur, des Drucks und/oder der Temperatur der angesaugten Luft oder anderer Betriebskenngrößen der Brennkraftmaschine.

Bei dem Steller handelt es sich vorzugsweise um ein elektromagnetisches Stellerwerk zur Verstellung der Regelstange. Dieses Stellwerk wird von der Steuerung mit einem Strom beaufschlagt. Abhängig vom Stromwert nimmt die Regelstange eine bestimmte Position ein. Mit der Regelstang ist der Sensor 170 verbunden. Dieser Sensor 170 liefert ein von der Position der Regelstange abhängenden Signalwert RW. Der Sensor 170 ist vorzugsweise als Potentiometer oder als Induktivgeber realisiert.

Diese Einrichtung arbeitet nun wie folgt. Die Sensoren 120 erfassen Werte bezüglich der Fahrpedalstellung, der Temperatur und des Luftdrucks bzw. weiterer Größen. Desweiteren werden die von den Sensoren 130 erfaßten Betriebskenngrößen der Brennkraftmaschine 100, dies sind beispielsweise die Drehzahl, der Einspritzzeitpunkt die Motortemperatur oder weitere Größen, ausgewertet. Ausgehend von diesen Meßgrößen bestimmt die Sollwertvorgabe 140 einen Sollwert zur Beaufschlagung des Stellers 160.

Üblicherweise ist ein Regelkreis vorgesehen, der die Position des Stellgliedes 160 auf einen vorgegebenen Positionswert einregelt. Hierzu ist ein Istwertgeber 170 vorgesehen, der einen Meßwert RW ausgibt, der der Position des Stellgliedes 160 entspricht. Die Istwertvorgabe 180 bestimmt ausgehend von diesem Wert einen Istwert. Der Regler 150 verknüpft diesen Istwert mit dem von der Sollwertvorgabe 140 gelieferten Sollwert. Ausgehend von dem Vergleich dieser beiden Größen liefert die Steuerung 150 eine Steuergröße zur Beaufschlagung des Stellgliedes 160.

Der Sensor 170, der die tatsächliche Stellung des Stellwerks erfaßt, sowie der Sensor 120, der die Fahrpedalstellung erfaßt, sind vorzugsweise als induktiv oder potentiometrisch wirkende Sensoren realisiert. Bei diesen Sensoren kann sich die Zuordnung zwischen der zu messenden Größe beispielsweise der Regelstangenstellung oder des Drehwinkels des Fahrpedals und dem Meßwert durch Exemplarstreuungen oder durch Drift im Laufe der Zeit ändern.

Um solche Erscheinungen zu erkennen, und ggf. korrigieren zu können, wird wie folgt vorgegangen. Während der Betriebsdauer der Brennkraftmaschine 100 treten üblicherweise regelmäßig ein oder mehrere Betriebszustände auf, in denen die vom Sensor zu messende Betriebskenngröße einen definierten Wert annimmt.

Erfindungsgemäß ist nun vorgesehen, daß die in diesem Betriebszustand erfaßten Meßwerte mit einem Referenzwert verglichen werden, der zu einem früheren Zeitpunkt gemessen wurde, als derselbe Betriebszustand vorlag. Vorzugsweise wird der Referenzwert in einem nicht flüchtigen Speicher abgespeichert. Weicht der neue Meßwert um mehr als eine vorgegebene Toleranz vom Referenzwert ab, wird auf eine unzulässige Drift des Sensors erkannt und beispielsweise eine Warnlampe eingeschaltet, um dem Fahrer diesen Fehler mitzuteilen.

In Figur 2 ist ein Flußdiagramm zur Verdeutlichung der Vorgehensweise zur Ermittlung des Referenzwertes dargestellt.

Die Referenzwertermittlung erfolgt vorzugsweise beim Abschalten der Brennkraftmaschine, beim ersten Einschalten des Steuergeräts oder in regelmäßigen Abständen beispielsweise bei jedem Start der Brennkraftmaschine. Andererseits kann auch vorgesehen sein, daß das Programm in bestimmten Zeitabständen bzw. nach bestimmter Fahrleistung aufgerufen wird. Desweiteren kann vorgesehen sein, daß dieses Programm im Rahmen der Wartung aufgerufen wird.

Ein möglicher Betriebszustand BZ1, bei dem die Position der Regelstange und damit der Meßwert bekannt ist, ist der stromlose Zustand des Stellwerks. Wird das Stellwerk 160 nicht bestromt, so nimmt die Regelstange eine mechanisch exakt definierte Position ein, den sogenannten Stopanschlag. Dieser Betriebszustand liegt bei abgeschalteter Brennkraftmaschine oder im Schubbetrieb vor. Dieser Zustand kann aber auch vom Steuergerät gezielt eingestellt werden, beispielsweise im sogenannten Nachlauf nach Motorstop, unmittelbar vor der Inbetriebnahme der Brennkraftmaschine oder im Schubbetrieb des Motors.

Ein zweiter Betriebzustand BZ2, bei dem die Position der Regelstange und damit der Meßwert bekannt ist, liegt vor, wenn das Stellwerk voll bestromt wird. In diesem Fall nimmt die Regelstange eine zweite mechanisch exakt definierte Position ein, den sogenannten Startanschlag.

Unmittelbar vor dem Start der Brennkraftmaschine bzw. im Nachlauf startet im Schritt 200 das Programm zur Referenzwertermittlung. Das Programm läuft ab, solange das Stellwerk noch nicht bestromt wird, bzw. während der Zeit in der die Startmenge zugemessen wird. Alternativ kann auch vorgesehen sein, daß nach Abstellen der Brennkraftmaschine im sogenannten Nachlauf der Referenzwert ermittelt wird. Die Abfrage 210 überprüft, ob der erste Betriebszustand BZ1 vorliegt. So wird beispielsweise überprüft, ob der Ansteuerstrom für das Stellwerk Null ist. Ist dies der Fall, so wird in der Abfrage 220 überprüft, ob bereits ein erster Referenzwert R1 abgespeichert wurde. Ist dies der Fall, so erfolgt die Abfrage 230. Diese Abfrage überprüft, ob ein neuer Referenzwert erfaßt werden soll.

Diese Abfrage 230 überprüft beispielsweise eine oder mehrere der folgenden Bedingungen. So wird beispielsweise überprüft, ob die anliegende Spannung insbesondere die Betriebsspannung und/oder die Motortemperatur innerhalb eines bestimmten Bereichs liegt. Die Referenzwertermittlung erfolgt nur, wenn die Betriebsspannung und/oder die Temperatur innerhalb eines Normalbereichs liegt. Bei Werten außerhalb des im Normalbetrieb vorliegenden Werten erfolgt keine Referenzwertermittlung. Bei einer weiteren Ausgestaltung ist vorgesehen, daß die Abfrage 230 überprüft, ob ein Merker D auf 1 gesetzt ist. Ist dies der Fall, so wird ein neuer Referenzwert ermittelt.

Erkennt diese Abfrage 230, daß ein neuer Referenzwert zu erfassen ist, bzw. erkennt die Abfrage 220, daß bisher noch kein Referenzwert R1 erfaßt wurde, so folgt Schritt 240. In diesem Fall wird der Meßwert RW erfaßt. Anschließend wird dieser Wert im Schritt 250 als erster Referenzwert R1 abgespeichert.

Bei einer besonders vorteilhaften Ausgestaltung ist vorgesehen, daß dieser Wert abhängig von verschiedenen Betriebsbedingungen in einer Kennlinie bzw. in einem Kennfeld abgespeichert wird. Vorzugsweise wird der Referenzwert als Funktion einer oder mehrer der Größen Stellwerkstrom, Temperatur, Drehzahl und/oder Batteriespannung abgelegt. Dabei kann die Kraftstofftemperatur, die Stellwerktemperatur und/oder die Motortemperatur eingehen. Als Drehzahl kann sowohl die Motordrehzahl als auch die Pumpendrehzahl verwendet werden.

Erkennt die Abfrage 230, daß kein neuer Referenzwert erfaßt werden soll, bzw. daß im Schritt 250 ein neuer Referenzwert abgespeichert wurde, so endet im Schritt 270 das Programm Referenzwertermittlung und das übliche Steuerprogramm folgt.

Eine besonders vorteilhafte Ausgestaltung ist gestrichelt dargestellt. Bei dieser Ausführungsform wird ein zweiter Referenzwert ermittelt, bei dem sich die Regelstange am Vollastanschlag befindet.

Erkennt die Abfrage 210, daß ein erster Betriebszustand BZ1 nicht vorliegt, so folgt eine zweite Abfrage 215, die überprüft, ob ein zweiter Betriebszustand BZ2 vorliegt. Ist dies nicht der Fall, so endet das Unterprogramm im Schritt 270. Ist dies der Fall, das heißt die Abfrage 215 erkennt, daß das Stellwerk voll bestromt wird, so befindet sich die Regelstange ebenfalls in einer mechanisch wohl definierten Position, dem Startanschlag.

So überprüft die Abfrage 215 beispielsweise, ob der Ansteuerstrom für das Stellwerk den Maximalwert erreicht. Ist dies der Fall, so wird in der Abfrage 225 überprüft, ob bereits ein zweiter Referenzwert R2 abgespeichert wurde. Ist dies der Fall, so erfolgt die Abfrage 235. Diese Abfrage überprüft entsprechend wie die Abfrage 230, ob ein neuer Referenzwert R2 erfaßt werden soll.

Erkennt diese Abfrage 235, daß ein neuer Referenzwert zu erfassen ist, bzw. erkennt die Abfrage 225, daß bisher noch kein Referenzwert R2 erfaßt wurde, so folgt Schritt 245. In diesem wird der Meßwert RW erfaßt. Das heißt, es wird ein Spannungswert, der ein Maß für die Regelposition darstellt, erfaßt. Anschließend wird dieser Wert im Schritt 255 als zweiter Referenzwert R2 abgespeichert.

Bei einer besonders vorteilhaften Ausgestaltung ist vorgesehen, daß dieser Wert abhängig von verschiedenen Betriebsbedingungen in einer Kennlinie bzw. in einem Kennfeld abgespeichert wird. Dieser Referenzwert wird ebenfalls vorzugsweise als Funktion einer oder mehrer der Größen Stellwerkstrom, Temperatur, Drehzahl und/oder Batteriespannung abgelegt. Die Referenzwerte R1 und/oder R2 werden vorzugsweise in einem nichtflüchtigen jederzeit beschreibbaren Speicher abgelegt.

Erkennt die Abfrage 235, daß kein neuer Referenzwert erfaßt werden soll, bzw. daß im Schritt 255 ein neuer Referenzwert abgespeichert wurde, so endet im Schritt 270 das Programm Referenzwertermittlung und das übliche Steuerprogramm folgt.

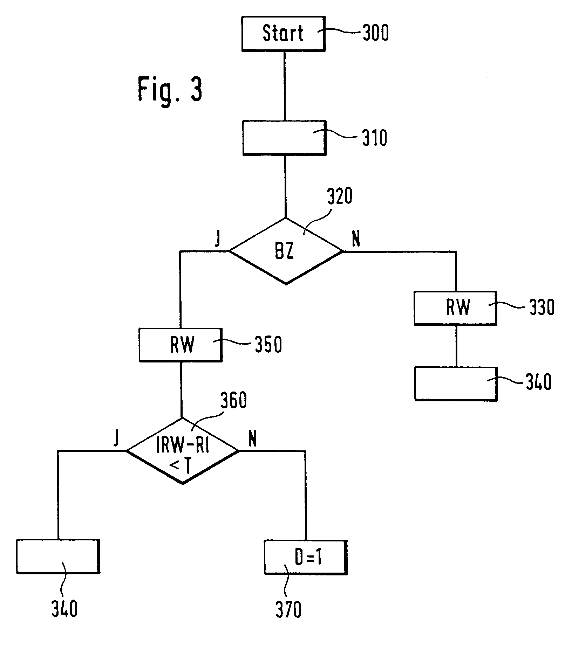

In Figur 3 ist nun ein Flußdiagramm zur Verdeutlichung des Verfahrens zur Erkennung von Driften aufgetragen. Dieses Programm wird bei jeder Meßwerterfassung durchlaufen. Im Schritt 300 startet das Unterprogramm Meßwerterfassung. Im Schritt 310 werden verschiedene Betriebskenngrößen erfaßt. Anschließend überprüft eine Abfrage 320, ob ein vorgegebener Betriebszustand BZ vorliegt. Ist dies nicht der Fall, so wird in Schritt 330 der Meßwert RW erfaßt und im Schritt 340 endet das Programm und es folgt das übliche Steuerprogramm.

Erkennt die Abfrage 320, daß der besondere Betriebszustand BZ vorliegt, so wird in Schritt 350 der Meßwert RW erfaßt. Anschließend überprüft die Abfrage 360, ob der Betrag der Differenz zwischen Meßwert RW und erstem Referenzwert R1 kleiner als eine Toleranzwert T ist. Weicht der Meßwert um mehr als einen Toleranzwert T von dem Referenzwert ab, so wird im Schritt 370 auf Fehler erkannt.

Im Fehlerfall kann beispielsweise eine Warnlampe angesteuert werden, bzw. es kann ein Notfahrbetrieb eingeleitet werden andererseits ist es auch möglich, einen Merker D auf 1 zu setzen, der anzeigt, daß eine Drift aufgetreten ist. Insbesondere wenn zwei Referenzwerte verwendet werden, die den unteren und oberen Anschlage der Regelstange charakterisieren, ist eine Kompensation der Drift möglich. Durch den gesetzten Merker D = 1 in einem Programm gemäß Figur 2 beispielsweise die Erfassung und Abspeicherung neuer Referenzwerte veranlaßt werden.

Erkennt die Abfrage 360 dagegen, daß der Toleranzwert T nicht erreicht wurde, so endet das Unterprogramm und es folgt das übliche Steuerprogramm 340.

Erfindungsgemäß wird also wie folgt vorgegangen. Wie in Figur 2 beschrieben, wird zu bestimmten Zeitpunkten, beispielsweise im Nachlauf oder beim Motorstopp, bei denen üblicherweise bestimmte definierte Betriebszuständen vorliegen ein Referenzwert oder mehrere Referenzwerte ermittelt. Im normalen Betrieb der Brennkraftmaschine wird bei Vorliegen der definierten Betriebszustände überprüft, ob der Meßwert gegenüber dem früher erfaßten Referenzwert sich verändert hat. Liegt eine solche Abweichung vom gespeicherten Referenzwert vor, wird auf Fehler erkannt. In diesem Fall liegt entweder eine Drift des Sensors oder eine Veränderung des mechanischen Anschlags vor.

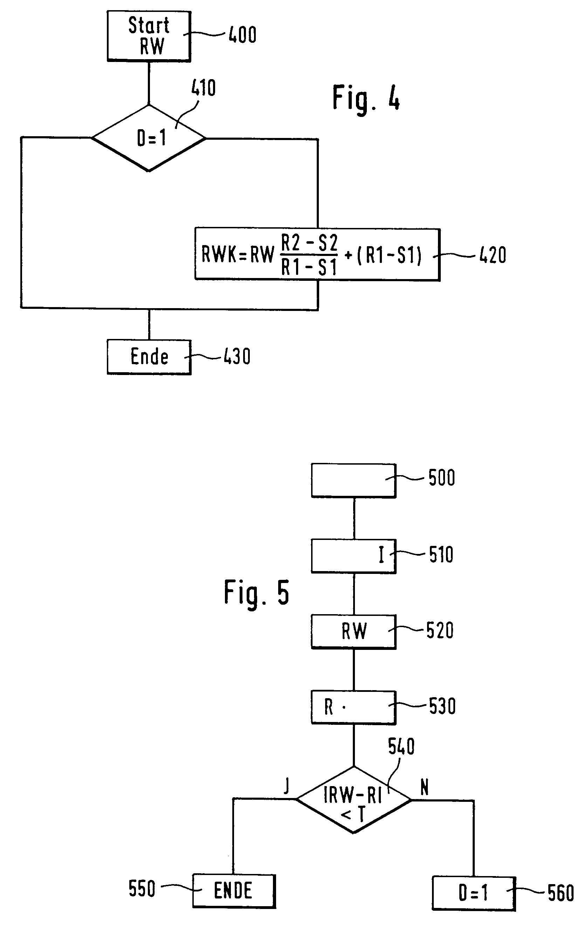

Der auf diese Weise erkannte Fehler wird zum einen angezeigt oder es erfolgt eine entsprechende Korrektur. Eine solche Korrektur ist in Figur 4 anhand eines Flußdiagramms dargestellt. Dieses Programm schließt sich an die Meßwerterfassung an. Hierzu ist es aber erforderlich, daß wie in Figur 2 gestrichelt dargestellt zwei Referenzwerte erfaßt werden. Liegt nur ein Referenzwert vor, so kann lediglich eine einfache Off-Set-Korrektur erfolgen. Wurde in Schritt 370 in Figur 3 auf Fehler erkannt, so sind die erfaßten Meßwerte zu korrigieren. Ein Korrekturprogramm ist als Flußdiagramm in Figur 4 dargestellt.

Im Schritt 400 startet das Korrekturprogramm gleichzeitig wird der Meßwert RW erfaßt. Anschließend folgt eine Abfrage 410. Diese überprüft, ob der Merker D auf Eins gesetzt ist. Ist dies nicht der Fall, so endet das Unterprogramm im Schritt 410. Erkennt die Abfrage 410, daß eine Drift vorliegt bzw. der Merker D auf Eins gesetzt ist, so wird in Schritt 420 ein korrigierter Regelweg RWK ausgehend von dem gemessenen Regelweg RW und den beiden Referenzwerten ermittelt. Dieser korrigierte Regelweg RWK wird dann für Regelzwecke verwendet.

Die Bestimmung des korrigierten Regelwegs erfolgt vorzugsweise gemäß der folgenden Formel:

$$RWK = RW * (R2 - S2) / (R1 - S1) + (R1 - S1).$$

Bei dem Wert S1 und S2 handelt sich um diejenigen Werte, die sich im Normalfall für die Referenzwerte R1 und R2 ergeben würden.

Eine weitere Ausführungsform ist in Figur 5 dargestellt. Bei dem bisher beschriebenen Ausführungsformen ist eine Drifterkennung immer nur in bestimmten Betriebszustanden, bei denen sich das Stellwerk in seinem Endanschlag befindet möglich. Ist der durch das Magnetstellwerk fließende Strom bekannt, so kann man den zugehörigen Regelwegmeßwert mit einem Wert aus einer Referenzkennlinie vergleichen, die bei einer früheren Messung aufgenommen wurde.

Hierzu werden bei der in Figur 1 dargestellten Vorgehensweise nicht einzelne Referenzwerte R1 sondern eine Referenzkennlinie bzw. ein Referenzkennfeld abhängig von Betriebskenngrößen, die in Schritt 200 erfaßt werden, abgespeichert. Als Parameter werden vorzugsweise die Kühlwassertemperatur` die Lufttemperatur, und/oder die Kraftstofftemperatur verwendet. Hierbei wird wie folgt vorgegangen. Nach Start des Programms im Schritt 500 wird im Schritt 510 der Stellwerksstrom i gemessen. Anschließend wird im Schritt 520 der Regelweg RW gemessen.

Im folgenden Schritt 530 wird ausgehend von dem Stellwerksstrom aus einem Referenzkennfeld oder einer Referenzkennlinie ein Referenzwert R ausgelesen. Eine Abfrage 540 überprüft dann, entsprechend wie bei Figur 3 die Abfrage 360, ob die Abweichung zwischen gemessenem Wert RW und Referenzwert R kleiner als eine Toleranzschwelle T ist. Ist dies der Fall, so endet das Programm 550. Ist dies nicht der Fall, das heißt die Abweichung zwischen Referenzwert und gemessenem Wert ist größer als ein Toleranzwert T, so wird im Schritt 560 auf Drift erkannt und entsprechende Maßnahmen eingeleitet.

**Patentansprüche**

1.  Verfahren zur Funktionsüberwachung eines Sensors, insbesondere eines Sensors zur Erfassung eines Meßwerts in einem Kraftfahrzeug, wobei bei Vorliegen vorgegebener Betriebszustände ein Meßwert erfaßt und mit einem Referenzwert verglichen wird, wobei ein Fehler erkannt wird, wenn ein vom Sensor bereitgestellter Meßwert um mehr als einen Toleranzwert von einem Referenzwert abweicht, dadurch gekennzeichnet, daß als Referenzwert ein zu einem früheren Zeitpunkt, bei dem ein entsprechender Betriebszustand vorlag, erfaßter und abgespeicherter Meßwert verwendet wird.

2.  Verfahren nach Anspruch 1, dadurch gekennzeichnet, daß der Referenzwert beim Einschalten und/oder in regelmäßigen Abständen insbesondere im Nachlauf erfaßt wird.

3.  Verfahren nach Anspruch 1 oder 2, dadurch gekennzeichnet, daß der vorgegebene Betriebszustand vorliegt, wenn sich ein Stellwerk in einem seiner Endanschläge befindet.

4.  Verfahren nach einem der vorherigen Ansprüche, dadurch gekennzeichnet, daß ein erkannter Fehler durch Mittel angezeigt wird und/oder daß eine Korrektur erfolgt.

5.  Verfahren nach einem der vorherigen Ansprüche, dadurch gekennzeichnet, daß eine additive und/oder eine multiplikative Korrektur einer Sensorkennlinie erfolgt.

6.  Verfahren nach einem der vorherigen Ansprüche, dadurch gekennzeichnet, daß an Stelle des Referenzwerts eine Referenzkennlinie oder ein Referenzkennfeld verwendet wird.

7.  Vorrichtung zur Funktionsüberwachung eines Sensors, insbesondere eines Sensors zur Erfassung eines Meßwerts in einem Kraftfahrzeug, mit Mitteln, die bei Vorliegen vorgegebener Betriebszustände ein Meßwert erfassen und mit einem Referenzwert vergleichen, wobei ein Fehler erkannt wird, wenn ein vom Sensor bereitgestellter Meßwert um mehr als einen Toleranzwert von einem Referenzwert abweicht, dadurch gekennzeichnet, daß Mittel vorgesehen sind, die als Referenzwert ein zu einem früheren Zeitpunkt, bei dem ein entsprechender Betriebszustand vorlag, erfaßten und abgespeicherten Meßwert verwenden.

Fig.1

Fig. 2

Fig. 3

Start
RW — 400

410

$0 = 1$

Fig. 4

$$RWK = RW \frac{R2 - S2}{R1 - S1} + (R1 - S1) — 420$$

Ende — 430

500

I — 510

Fig. 5

RW — 520

R · — 530

540

J  $\frac{IRW - RI}{< T}$  N

ENDE — 550

$0 = 1$ — 560

9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG |
|---|---|---|---|
| X | EP-A-0 404 069 (JAPAN ELECTRONIC CONTROL SYSTEMS CO. LTD) | 1,4-7 | G01D18/00 F02D41/22 |
| Y | * Spalte 2, Zeile 40 - Spalte 3, Zeile 4; Abbildung 3 * * Spalte 5, Zeile 38 - Zeile 40 * --- | 2,3 | |
| Y | PATENT ABSTRACTS OF JAPAN vol. 9, no. 209 (M-407) 27. August 1985 & JP-A-60 069 238 (MAZDA KK) 19. April 1985 * Zusammenfassung * --- | 2,3 | |
| X | DE-A-41 22 828 (MITSUBISHI JIDOSHA KOGYO K.K.) * Ansprüche 1-3 * ----- | 1,7 | |

**RECHERCHIERTE SACHGEBIETE (Int.Cl.6)**

G01D
F02D

Der vorliegende Recherchenbericht wurde für alle Patentansprüche erstellt

| Recherchenort | Abschlußdatum der Recherche | Prüfer |
|---|---|---|
| DEN HAAG | 12. Januar 1995 | Lut, K |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
....................................................................................
& : Mitglied der gleichen Patentfamilie, übereinstimmendes
    Dokument

EPO FORM 1503 03.82 (P04C03)